(19) Europäisches Patentamt / European Patent Office / Office européen des brevets

(11) **EP 3 206 161 B1**

(12) **FASCICULE DE BREVET EUROPEEN**

(45) Date de publication et mention
de la délivrance du brevet:
**24.07.2024 Bulletin 2024/30**

(21) Numéro de dépôt: **17155348.0**

(22) Date de dépôt: **09.02.2017**

(51) Classification Internationale des Brevets (IPC):
***G06V 10/30*** *(2022.01)*     ***G06V 10/56*** *(2022.01)*
***G06V 30/412*** *(2022.01)*

(52) Classification Coopérative des Brevets (CPC):
**G06V 30/412; G06V 10/30; G06V 10/56;**
G06V 10/247

(54) **PROCÉDÉ DE DÉTERMINATION D'UNE VALEUR DE COULEUR D'UN OBJET DANS UNE IMAGE**

VERFAHREN ZUR BESTIMMUNG EINES FARBWERTS EINES OBJEKTS AUF EINEM BILD

METHOD FOR DETERMINING A COLOUR VALUE OF AN OBJECT IN AN IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.02.2016 FR 1651157**

(43) Date de publication de la demande:
**16.08.2017 Bulletin 2017/33**

(73) Titulaire: **Carrus Gaming**
**75010 Paris (FR)**

(72) Inventeurs:
- **ROSTAING, Laurent**
  **92130 ISSY LES MOULINEAUX (FR)**
- **ROUH, Alain**
  **92130 ISSY LES MOULINEAUX (FR)**
- **BEAUDET, Jean**
  **92130 ISSY LES MOULINEAUX (FR)**

(74) Mandataire: **Fidal Innovation**
**4-6 avenue d'Alsace**
**92400 Courbevoie (FR)**

(56) Documents cités:
**WO-A1-2009/137073**    **US-A1- 2001 033 688**
**US-A1- 2015 379 339**

- **HEWLETT-PACKARD COMPANY ET AL: "Mobile document scanning and copying", RESEARCH DISCLOSURE, MASON PUBLICATIONS, HAMPSHIRE, GB, vol. 568, no. 17, 1 August 2011 (2011-08-01), pages 939, XP007140747, ISSN: 0374-4353**
- **M LEFEBVRE ET AL: "EUROGRAPHICS 2014/ S A Survey of Color Mapping and its Applications", 1 January 2014 (2014-01-01), XP055194560, Retrieved from the Internet <URL:http://taniapouli.co.uk/research/EG2014star.pdf> [retrieved on 20150609]**

EP 3 206 161 B1

**Description**

L'invention concerne un procédé de détermination d'une valeur de couleur apparente de pixels correspondant à une sous-partie d'un objet représenté dans une image, un procédé permettant de déterminer qu'une marque a été appliquée sur une sous-partie d'un document et un procédé de correction d'une image d'un document utilisant le procédé de détermination, et un dispositif mettant en oeuvre un desdits procédés.

Il est courant d'avoir à cocher des cases dans un document, par exemple, pour répondre à un questionnaire à choix multiples ou pour remplir un bulletin de jeu. Afin d'accélérer une procédure de traitement du document, le document est en général numérisé sous forme d'image par un système d'acquisition d'images et l'image du document numérisé est analysée pour déterminer sur quelles cases une marque a été appliquée. On note qu'une image est une grille de pixels, chaque pixel étant associé à une information de position dans l'image (*i.e.* des coordonnées du pixel dans l'image) et à une valeur de couleur. La valeur de couleur d'un pixel est représentée par un vecteur de composantes pouvant comprendre un nombre supérieur ou égal à un de composantes. Chaque vecteur de composantes est donné dans un espace colorimétrique, tel que l'espace RGB, YUV ou YCbCr. D'autres espaces colorimétriques existent toutefois.

Des procédés ont ainsi été proposés afin de détecter et d'identifier, dans une image représentant le document numérisé, une position et un contenu de sous-parties d'un document, tels que des cases ou des zones comprenant un ou plusieurs caractères, sur lesquelles une marque peut être appliquée. Nombre de ces procédés, tels que ceux divulgués par le brevet US5140139 ou la demande de brevet US2008/0311551 utilisent des techniques d'OCR (« Optical Character Recognition ») ou d'OMR (« Optical Mark Recognition ») afin de retrouver la position d'une case dans l'image du document numérisé à partir d'un modèle de document connu et de déterminer le contenu de la case.

De tels procédés sont capables de prendre en compte certains aléas dans un positionnement du document lors de sa numérisation par rapport au modèle de document connu, tel qu'une rotation ou un agrandissement. Ces procédés sont, par contre, sensibles à d'éventuelles déformations géométriques du document, dues par exemple à un pliage, un froissement du document et/ou à une prise de vue en perspective du document. Ces déformations géométriques sont, en effet, susceptibles de faire varier des positions relatives des cases à détecter les unes par rapport aux autres.

Des systèmes ont alors été proposés comprenant des moyens permettant de défroisser mécaniquement un document avant sa numérisation. De tels systèmes sont efficaces mais sont généralement complexes, encombrants et augmentent sensiblement le coût des systèmes d'acquisition d'images.

D'autres procédés, tels que celui décrit dans le brevet FR 2952218, proposent de défroisser un document numérisé par voie logicielle et matérielle, afin de déterminer une image virtuelle du document déformé. Il est alors aisé de retrouver les sous-parties du document, telles que les cases, sur lesquelles une marque peut être appliquée à partir de l'image virtuelle.

La demande de brevet FR1459742 propose un procédé d'identification de sous-parties d'un document sur lesquelles une marque peut être appliquée, le document étant susceptible d'être déformé. Ledit procédé comprend une numérisation du document sous forme d'image, une identification de sous-parties candidates dans l'image du document et un calcul d'une signature pour chacune des sous-parties candidates. L'identification des sous-parties du document sur lesquelles une marque peut être appliquée, comprend conjointement une comparaison des signatures calculées avec des signatures de référence, ladite comparaison étant réalisée à partir d'un modèle de déformation géométrique du document et une estimation, en fonction de ladite comparaison, dudit modèle de déformation géométrique.

Toutefois, les déformations géométriques ne sont pas les seules déformations que peut subir un document. D'autres types de déformations, dites déformations colorimétriques, peuvent modifier l'aspect visuel d'un document dans l'image du document numérisé. Ainsi, des variations de luminosité lors d'une acquisition de l'image du document numérisé, des défauts d'un dispositif d'acquisition d'images compris dans le système d'acquisition d'image, peuvent entraîner des divergences entre des couleurs réelles du document et des couleurs apparentes du document dans l'image du document numérisé. Par exemple, une case d'une première couleur dans le document peut apparaître avec une seconde couleur, différente de la première couleur, dans l'image du document numérisé. US2001033688 A1 décrit une méthode pour corriger les déformations colorimétriques ainsi que les déformations géométriques par rapport à un document de référence.

Il est connu que beaucoup de procédés permettant de déterminer si une marque a été appliquée sur une sous-partie, telle qu'une case à cocher dans un document, s'appuient sur une analyse des couleurs dans la case. On comprend alors aisément que, si la couleur apparente de la case dans l'image du document numérisé ne correspond pas à une couleur attendue, par exemple la couleur réelle de la case dans le document, alors il devient difficile de prendre une décision fiable quant à savoir si une marque a été appliquée sur la case.

Il est souhaitable de pallier ces inconvénients de l'état de la technique.

Il est notamment souhaitable de proposer une méthode et un dispositif permettant de déterminer une couleur apparente de pixels d'une image correspondant à une sous-partie d'un document (telle qu'une case) sur laquelle une marque peut être appliquée (*i.e.* une sous-partie du document destinée à recevoir une marque) lorsque ce document a subi une déformation géométrique et une déformation colorimétrique. Ce procédé peut, par exemple, être utilisé pour améliorer un procédé de détection de cases cochées, par exemple, en réduisant le nombre d'erreurs de détection de cases cochées.

Selon un premier aspect de l'invention, l'invention concerne un procédé de détermination d'une valeur de couleur apparente de pixels correspondant à une sous-partie d'un document destinée à recevoir des marques représenté dans une image, dite image acquise. Le procédé comprend : estimer un modèle de déformation géométrique dudit document dans l'image acquise par rapport à un modèle de référence du document; à partir du modèle de déformation géométrique et du modèle de référence du document, déterminer une position dans l'image acquise de la sous-partie et déterminer une zone de l'image acquise, dite zone de référence, située dans un voisinage prédéterminé de la sous-partie, chaque pixel de la zone de référence étant issu d'une projection dans l'image acquise d'une zone du modèle de référence du document non destinée à recevoir une marque, dite zone vierge, la zone vierge étant associée à une seconde valeur de couleur prédéterminée dans le modèle de référence du document, ladite seconde valeur de couleur prédéterminée ayant un écart connu avec une première valeur de couleur prédéterminée associée à la sous-partie dans le modèle de référence du document, la projection utilisant le modèle de déformation géométrique ; et, déterminer une valeur de couleur apparente des pixels de la sous-partie, à partir d'une valeur de couleur d'au moins un pixel de la zone de référence et dudit écart.

Ainsi, même si l'objet apparaît dans l'image acquise avec une déformation géométrique et une déformation colorimétrique, il est possible de déterminer la couleur, *i.e.* la valeur de couleur apparente, que devrait avoir une sous-partie dans l'image acquise, si aucune marque n'a été appliquée sur cette sous-partie. Sachant de quelle couleur devrait être une sous-partie dans l'image acquise, il est possible de détecter avec plus de fiabilité si une marque a été appliquée sur cette sous-partie et/ou de corriger la couleur de ladite sous-partie.

Selon un deuxième aspect de l'invention, l'invention concerne un procédé permettant de déterminer qu'une marque a été appliquée sur une sous-partie d'un document, ledit document comprenant au moins une sous-partie sur laquelle une marque peut être appliquée, une image représentative du document, dite image acquise, ayant été acquise par un dispositif d'acquisition d'images. Le procédé comprend les étapes suivantes : pour chaque sous-partie du document sur laquelle une marque peut être appliquée, déterminer une valeur de couleur apparente des pixels de l'image acquise correspondant à la sous-partie en appliquant le procédé selon le premier aspect à la sous-partie; et, décider, pour chaque sous-partie du document sur laquelle une marque peut être appliquée, qu'une marque a été appliquée sur ladite sous- partie lorsqu'une proportion de pixels correspondant à la sous-partie ayant une valeur de couleur, dite valeur de couleur de pixel, proche de la valeur de couleur apparente est inférieure à un premier seuil prédéterminé, une valeur de couleur de pixel étant proche de la valeur de couleur apparente lorsqu'une différence entre ladite valeur de couleur de pixel et la valeur de couleur apparente est inférieure à une différence prédéterminée.

De cette manière, la détection de sous-parties comprenant une marque est fiabilisée grâce au procédé selon le premier aspect.

Dans un mode de réalisation, le procédé comprend, en outre, appliquer une correction aux pixels de l'image acquise correspondant à chaque sous-partie du document sur laquelle peut être appliquée une marque en fonction de la valeur de couleur apparente obtenue pour ladite sous-partie, chaque pixel sur lequel une correction est appliquée devenant un pixel corrigé, chaque pixel pris en compte pour déterminer si la proportion de pixels correspondant à la sous-partie ayant une valeur de couleur de pixel proche de la valeur de couleur apparente est inférieure au premier seuil prédéterminé étant un pixel corrigé.

Dans un mode de réalisation, la correction appliquée aux pixels de l'image acquise correspondant à une sous-partie du document sur laquelle une marque peut être appliquée comprend appliquer un facteur de normalisation différent à chaque composante de chacun desdits pixels, chaque facteur de pondération étant calculé à partir de la valeur de couleur apparente associée à ladite sous-partie.

Dans un mode de réalisation, le procédé comprend, en outre, filtrer, parmi les valeurs de couleur apparentes déterminées pour chaque sous-partie du document sur laquelle une marque peut être appliquée, des valeurs de couleur aberrantes, une valeur de couleur apparente d'une première sous-partie d'un document étant considérée comme aberrante lorsqu'une différence entre la valeur de couleur apparente et une valeur de couleur, dite valeur de couleur de voisinage, représentative de valeurs de couleur apparentes de secondes sous-parties, voisines de la première sous-partie, est supérieure à un deuxième seuil prédéterminé, une seconde sous-partie étant voisine d'une première sous-partie lorsqu'une distance entre la première et la seconde sous-partie est inférieure à une distance prédéterminée, la valeur de couleur apparente associée à une sous-partie étant remplacée par la valeur de couleur de voisinage lorsque la valeur de couleur apparente est une valeur de couleur aberrante.

Dans un mode de réalisation, chaque sous-partie du document est une case délimitée par un contour et le procédé comprend en outre pour chaque case du document: déterminer, à partir du modèle de déformation et du modèle de référence du document, une position de chaque pixel correspondant au contour de la case ; déterminer une valeur de couleur, dite valeur de couleur de contour, représentative de valeurs de couleur de pixels dudit contour ; et, corriger la valeur de couleur de chaque pixel dudit contour et/ou de chaque pixel situé à l'intérieur dudit contour en utilisant la valeur de couleur de contour et une valeur de couleur des pixels du contour donnée par le modèle de référence du document.

Dans un mode de réalisation, lors d'une correction d'un pixel dudit contour ou d'un pixel situé à l'intérieur dudit contour, le pixel est transformé de manière à le représenter dans un espace colorimétrique dans lequel chaque pixel est associé à des composantes comprenant une composante teinte, la correction consistant à modifier la composante de teinte en utilisant une composante de teinte issue de la valeur de couleur de contour et une composante de teinte issue de la valeur de couleur des pixels du contour donnée par le modèle de référence du document.

Selon un troisième aspect de l'invention, l'invention concerne un procédé de correction d'une image, dite image acquise, d'un document, ledit document comprenant au moins une sous-partie sur laquelle une marque peut être appliquée. Le procédé comprend les étapes suivantes : pour chaque sous-partie du document sur laquelle une marque peut être appliquée, déterminer une valeur de couleur apparente des pixels de l'image acquise correspondant à la sous-partie en appliquant le procédé selon le premier aspect à la sous-partie; et, appliquer une correction aux pixels de l'image acquise correspondant à chaque sous-partie du document en fonction de la valeur de couleur apparente obtenue pour ladite sous-partie.

Ainsi, il est possible d'appliquer une correction à la couleur d'une sous-partie du document prenant en compte les déformations géométriques et colorimétriques subies par le document.

Dans un mode de réalisation, la correction appliquée aux pixels de l'image acquise correspondant à une sous-partie du document comprend appliquer un facteur de normalisation différent à chaque composante de chacun desdits pixels, chaque facteur de pondération étant calculé à partir de la valeur de couleur apparente associée à ladite sous-partie.

Dans un mode de réalisation, le procédé comprend, en outre, filtrer, parmi les valeurs de couleur apparentes déterminées pour chaque sous-partie du document sur laquelle une marque peut être appliquée, des valeurs de couleur aberrantes, une valeur de couleur apparente d'une première sous-partie étant considérée comme aberrante lorsqu'une différence entre la valeur de couleur apparente et une valeur de couleur, dite valeur de couleur de voisinage, représentative de valeurs de couleur apparentes de secondes sous-parties, voisines de la première sous-partie, est supérieure à un seuil prédéterminé, une seconde sous-partie étant voisine d'une première sous-partie lorsqu'une distance entre la première et la seconde sous-partie est inférieure à une distance prédéterminée, la valeur de couleur apparente associée à une sous-partie étant remplacée par la valeur de couleur de voisinage lorsque la valeur de couleur apparente est une valeur de couleur aberrante.

Dans un mode de réalisation, chaque sous-partie du document est une case délimitée par un contour et le procédé comprend en outre pour chaque case du document : déterminer, à partir du modèle de déformation et du modèle de référence du document, une position de chaque pixel correspondant au contour de la case ; déterminer une valeur de couleur, dite valeur de couleur de contour, représentative de valeurs de couleur de pixels dudit contour ; et, corriger la valeur de couleur de chaque pixel dudit contour et/ou de chaque pixel situé à l'intérieur dudit contour en utilisant la valeur de couleur de contour et une valeur de couleur des pixels du contour donnée par le modèle de référence du document.

Dans un mode de réalisation, lors d'une correction d'un pixel dudit contour ou d'un pixel situé à l'intérieur dudit contour, le pixel est transformé de manière à le représenter dans un espace colorimétrique dans lequel chaque pixel est associé à des composantes comprenant une composante de teinte, la correction consistant à modifier la composante de teinte en utilisant une composante de teinte issue de la valeur de couleur de contour et une composante de teinte issue de la valeur de couleur des pixels du contour donnée par le modèle de référence du document.

Selon un quatrième aspect de l'invention, l'invention concerne un dispositif comprenant des moyens pour mettre en oeuvre le procédé selon le premier aspect ou selon le deuxième aspect ou selon le troisième aspect.

Selon un cinquième aspect de l'invention, l'invention concerne un système d'acquisition d'image comprenant un dispositif selon le quatrième aspect.

Selon un sixième aspect de l'invention, l'invention concerne un programme d'ordinateur, comprenant des instructions pour mettre en oeuvre, par un dispositif, le procédé selon le premier aspect, ou le procédé selon le deuxième aspect ou le procédé selon le troisième aspect, lorsque ledit programme est exécuté par un processeur dudit dispositif.

Selon un septième aspect de l'invention, l'invention concerne des moyens de stockage, stockant un programme d'ordinateur comprenant des instructions pour mettre en oeuvre, par un dispositif, le procédé selon le premier aspect, ou le procédé selon le deuxième aspect ou le procédé selon le troisième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de document en cours de numérisation ;
- la Fig. 2 illustre schématiquement un exemple de système d'acquisition et d'analyse d'images ;
- la Fig. 3 illustre schématiquement un exemple d'architecture matérielle d'un module d'analyse compris dans le système d'acquisition d'images ;

- la Fig. 4A illustre schématiquement un exemple de modèle de référence d'un document;
- la Fig. 4B illustre schématiquement un exemple de document, correspondant au modèle de référence, ayant subi une première déformation géométrique;
- la Fig. 4C illustre schématiquement un exemple de document, correspondant au modèle de référence, ayant subi une deuxième déformation géométrique;
- la Fig. 5 illustre schématiquement un procédé permettant de déterminer qu'une marque a été appliquée sur au moins une sous-partie d'un document ;
- la Fig. 6 illustre schématiquement un procédé de détermination d'une valeur de couleur apparente de pixels correspondant à une sous-partie d'un objet sur laquelle une marque peut être appliquée, l'objet étant représenté dans une image ; et,
- la Fig. 7 illustre schématiquement un procédé de correction basé sur des valeurs de couleur d'un contour d'une case.

L'invention est décrite par la suite dans un contexte de documents numérisés à deux dimensions résultant d'une numérisation d'un document à deux dimensions ou à trois dimensions. En effet, suivant les déformations qu'il a subies, un document avant sa numérisation peut être à deux dimensions ou à trois dimensions. Le document peut par exemple être une feuille de papier comportant des cases à cocher. L'invention peut toutefois s'appliquer à toute sorte d'objets. L'invention peut par exemple s'appliquer à un objet numérisé à trois dimensions résultant d'une numérisation d'un objet à trois dimensions comprenant des sous-parties sur lesquelles des marques peuvent être appliquées. La numérisation dudit objet peut, par exemple, avoir provoqué des déformations géométriques et colorimétriques.

Par ailleurs, nous décrivons une mise en oeuvre de l'invention par un système faisant aussi une acquisition d'une image du document à numériser. L'invention s'applique aussi dans le cas où le système ou dispositif mettant en oeuvre l'invention obtient une image d'un document d'un système ou dispositif d'acquisition d'images indépendant du dispositif ou système mettant en oeuvre l'invention.

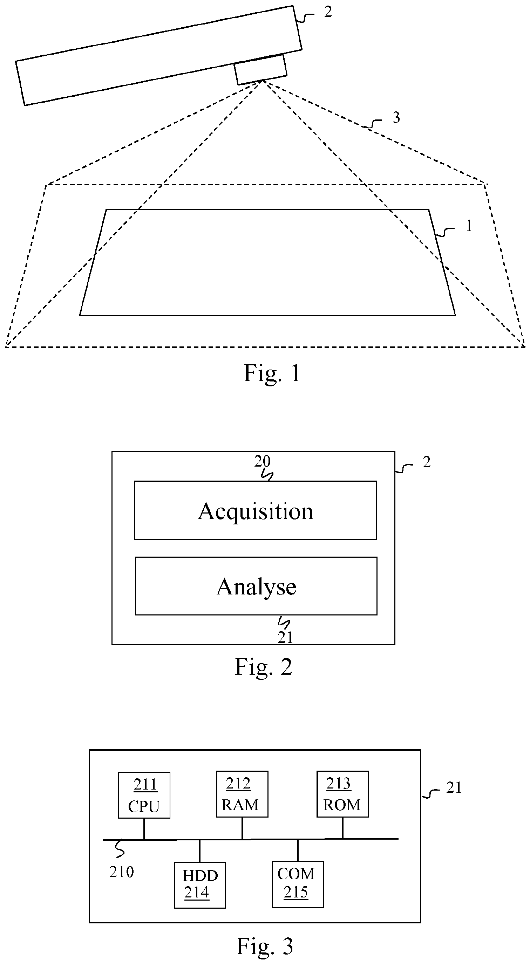

La **Fig. 1** illustre schématiquement un exemple de document en cours de numérisation.

Le document 1 en cours de numérisation est par exemple une feuille de papier rectangulaire comportant des sous-parties, telles que des cases, sur lesquelles peuvent être appliquées des marques, telle qu'une croix, un point ou un trait.

Le document 1 est numérisé par un système 2 faisant, dans le cadre de l'invention, office de système d'acquisition d'images. Dans l'exemple de la Fig. 1 le système d'acquisition d'images 2 est par exemple un téléphone intelligent (« smartphone » en terminologie anglo-saxonne), une tablette ou un appareil photo-numérique. Le document est vu par le système d'acquisition d'images suivant un champ optique 3 quelconque. Le système d'acquisition d'images fait une acquisition d'une image du document 1. Dans l'exemple de la Fig. 1, le champ optique 3 selon lequel le système d'acquisition d'images voit le document implique que le document est vu en perspective, ce qui provoque, dans l'image du document ainsi numérisé, appelée image acquise, une déformation du document.

Dans un mode de réalisation, le document est un bulletin de jeu comportant des cases à cocher.

Dans un mode de réalisation, le système d'acquisition d'image 2 est un système dédié à la numérisation de bulletins de jeu dans lequel un utilisateur fait passer le bulletin de jeu de manière spécifique. Dans un mode de réalisation, le système dédié comprend par exemple un scanner de documents.

La **Fig. 2** illustre schématiquement un exemple de système d'acquisition d'images.

Le système d'acquisition d'image comporte un dispositif d'acquisition d'images 20 comprenant un système optique et un capteur d'images tel qu'un capteur CCD (dispositif à transfert de charge : « charge-coupled device » en terminologie anglo-saxonne) ou CMOS (semi-conducteur métal-oxyde complémentaire, « complementary metal-oxide-semiconductor » en terminologie anglo-saxonne) et un module d'analyse 21 apte à mettre en oeuvre les procédés selon l'invention.

La **Fig. 3** illustre schématiquement un exemple d'architecture matérielle du module d'analyse 21 compris dans le système d'acquisition d'images 2.

Selon l'exemple d'architecture matérielle représenté à la Fig. 3, le module d'analyse 21 comprend alors, reliés par un bus de communication 210 : un processeur ou CPU (« Central Processing Unit » en anglais) 211 ; une mémoire vive RAM (« Random Access Memory » en anglais) 212 ; une mémoire morte ROM (« Read Only Memory » en anglais) 213 ; une unité de stockage telle qu'un disque dur ou un lecteur de support de stockage, tel qu'un lecteur de cartes SD (« Secure Digital » en anglais) 214 ; au moins une interface de communication 215 permettant au module d'analyse 21 de communiquer avec le dispositif d'acquisition d'images 20.

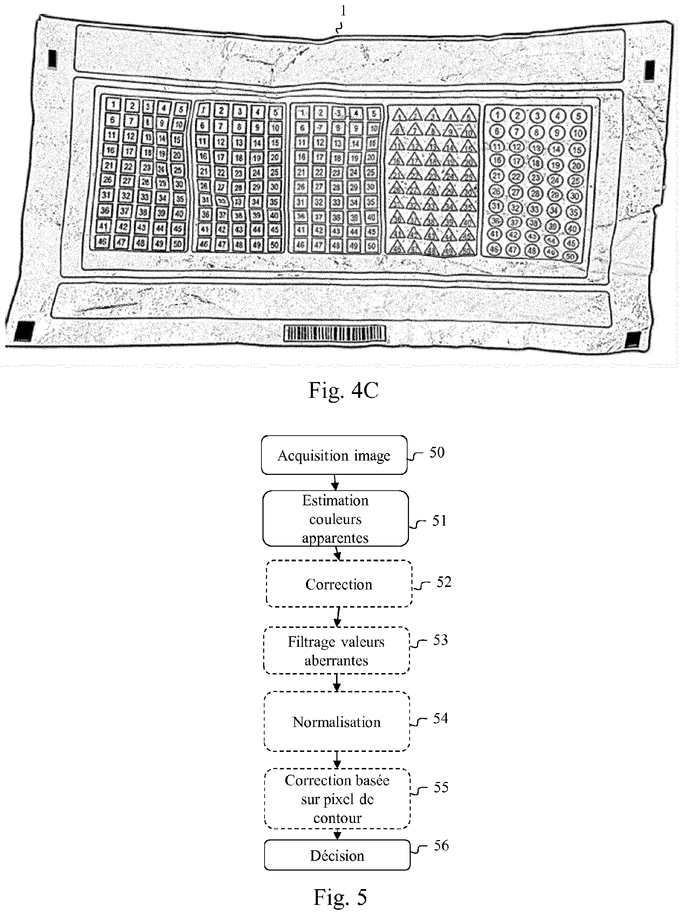

Le processeur 211 est capable d'exécuter des instructions chargées dans la RAM 212 à partir de la ROM 213, d'une mémoire externe (non représentée), d'un support de stockage (tel qu'une carte SD), ou d'un réseau de communication. Lorsque le module d'analyse 21 est mis sous tension, le processeur 211 est capable de lire de la RAM 212 des instructions et de les exécuter. Ces instructions forment un programme d'ordinateur causant la mise en oeuvre, par le processeur 211, de tout ou partie des procédés décrits ci-après en relation avec les Figs. 5, 6 et 7.

Les procédés décrits ci-après en relation avec les Figs. 5, 6 et 7 peuvent être implémentés sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit » en terminologie anglo-saxonne), ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 5** illustre schématiquement un procédé permettant de déterminer qu'une marque a été appliquée sur au moins une sous-partie d'un document.

Dans une étape 50, le système d'acquisition d'images 2, fait une acquisition d'une image du document 1 par l'intermédiaire de son dispositif d'acquisition d'images 20.

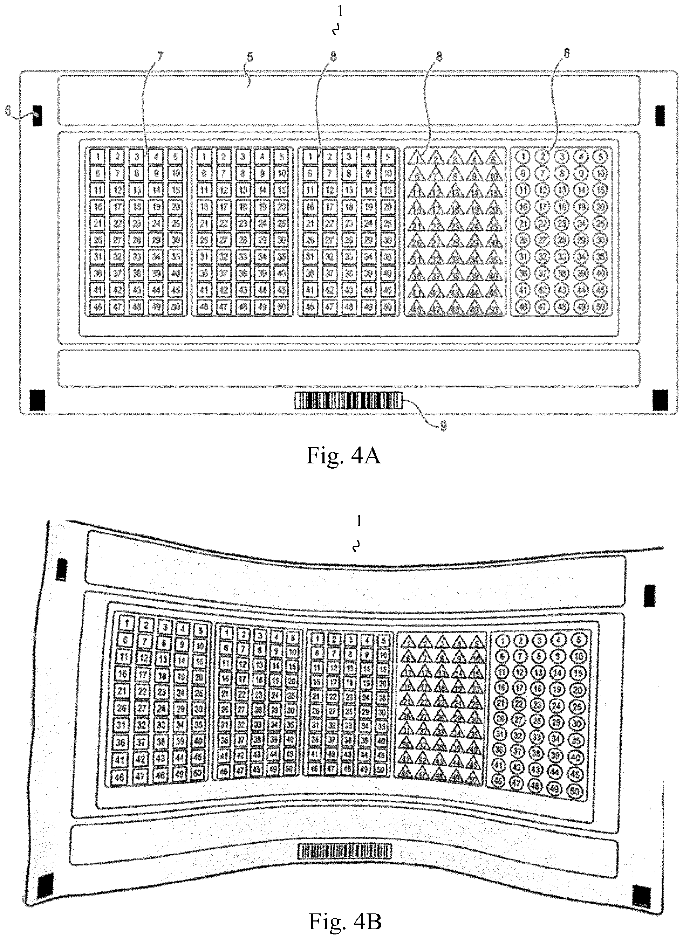

La **Fig. 4A** illustre schématiquement un exemple de modèle de référence du document 1.

Le modèle de référence est par exemple une image du document 1 n'ayant subi aucune déformation géométrique ni aucune déformation colorimétrique. Dans l'exemple de la Fig. 4A, le document 1 est un bulletin de jeu. Un tel bulletin peut comprendre des éléments de décor 5, des pavés de positionnement 6, des grilles 7 comprenant des cases 8, et un code 9 (ici un code barre) permettant de reconnaître un type du document. On entend par case une sous-partie possédant un contour fermé ou non fermé quelconque, ou une sous-partie de forme quelconque ayant une couleur de fond différente d'une couleur de fond du bulletin de jeu, mais sans trait de délimitation. Une case délimite un espace destiné à être rempli par un utilisateur (i.e un espace sur lequel une marque peut être appliquée par un utilisateur ou destinée à recevoir une marque d'un utilisateur). Un tel contour peut être repéré par un trait ayant une couleur différente d'une couleur de l'intérieur de la case. Dans l'exemple illustré en Fig. 4A, certaines cases possèdent un contour fermé carré et d'autres cases possèdent un contour fermé en étoile. Des cases peuvent également posséder un contenu tel qu'un chiffre comme illustré en Fig. 4A.

Dans un mode de réalisation, les sous-parties ne sont pas délimitées par un contour mais par un voisinage prédéterminé autour d'un (ou plusieurs) caractère(s) sur lequel (ou lesquels) il est possible d'appliquer une marque. Le voisinage prédéterminé est par exemple un cercle centré sur ledit caractère de rayon prédéterminé, par exemple égale à « 1 » cm.

Dans un mode de réalisation, la valeur de couleur de l'intérieur de chaque sous-partie du document 1 est identique et égale à une première valeur de couleur prédéterminée.

Dans un mode de réalisation, la valeur de couleur de l'intérieur d'au moins un sous-ensemble de sous-parties du document 1 est identique et égale à une première valeur de couleur prédéterminée.

La **Fig. 4B** illustre schématiquement un exemple de document 1, correspondant au modèle de référence de la Fig. 4A, ayant subi une première déformation géométrique.

Dans l'exemple de la Fig. 4B, le document 1 a été enroulé et n'a pas été complètement déroulé lors de l'acquisition de l'image acquise. Dans cet exemple, le document 1, qui était à l'origine un document à deux dimensions, est maintenant un document à trois dimensions.

La **Fig. 4C** illustre schématiquement un exemple de document 1, correspondant au modèle de référence de la Fig. 4A, ayant subi une deuxième déformation géométrique.

Dans l'exemple de la Fig. 4C, le document 1 a été froissé et n'a pas été défroissé lors de l'acquisition de l'image acquise. Là encore, le document 1, qui était à l'origine un document à deux dimensions, est maintenant un document à trois dimensions.

Dans les deux exemples de document 1 ayant subi une déformation décrits en relation avec les Figs. 4B et 4C, à chaque déformation géométrique viennent s'ajouter des déformations colorimétriques provoquées par des inégalités d'illumination du document lors de sa numérisation. Ces déformations colorimétriques peuvent être globales et avoir affecté de la même manière tout le document 1 lors de sa numérisation, ou locales et avoir affectées inégalement le document 1 lors de sa numérisation.

Grâce au modèle de référence du document 1, la valeur de couleur originelle de chaque pixel du modèle de référence du document 1 (*i.e.* la valeur de couleur réelle du pixel dans le document 1) est connue. Plus particulièrement la valeur de couleur de chaque pixel d'une sous-partie du document 1 est connue et égale à la première valeur de couleur prédéterminée. Mais, suite aux déformations géométriques et aux déformations colorimétriques subies par le document 1, chaque pixel de la sous-partie peut apparaître dans l'image acquise avec une valeur de couleur, dite valeur de couleur apparente, différente de la première valeur de couleur prédéterminée. La valeur de couleur apparente est la valeur de couleur d'une sous-partie telle qu'elle apparaît dans l'image acquise du document 1 lorsqu'aucune marque n'a été appliquée sur ladite sous-partie. Il est alors intéressant de pouvoir déterminer pour chaque sous-partie du document 1 sur laquelle peut être appliquée une marque, quelle est la valeur de couleur apparente correspondant à la première valeur de couleur prédéterminée. Une connaissance de la valeur de couleur apparente d'une sous-partie du document 1 peut être utilisée par exemple pour décider de manière fiable si une marque a été appliquée sur la sous-partie ou pas, ou pour apporter une correction aux pixels correspondant à la sous-partie dans l'image du document 1.

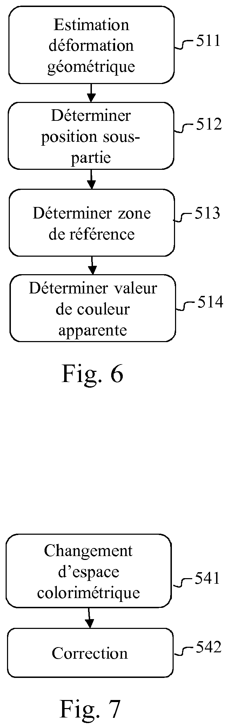

De retour à la Fig. 5, dans une étape 51, pour chaque sous-partie du document 1 sur laquelle une marque peut être appliquée, le module d'analyse 21 détermine une valeur de couleur apparente des pixels de l'image acquise correspondant à la sous-partie en appliquant un procédé décrit en relation avec la Fig. 6 à ladite sous-partie.

Dans une étape 56, le module d'analyse 21, décide, pour chaque-sous partie du document 1 sur laquelle une marque peut être appliquée, qu'une marque a été appliquée sur ladite sous-partie lorsqu'une proportion de pixels correspondant à la sous-partie ayant une valeur de couleur, dite valeur de couleur de pixel, proche de la valeur de couleur apparente est inférieure à un seuil prédéterminé, une valeur de couleur de pixel étant proche de la valeur de couleur apparente lorsqu'une différence entre la valeur de couleur de pixel et la valeur de couleur apparente est inférieure à une différence prédéterminée. Par exemple, lorsque la proportion de pixels correspondant à la sous-partie ayant une valeur de couleur proche de la valeur de couleur apparente est inférieure à « 50% », le module d'analyse 21 décide qu'une marque a été appliquée sur la sous-partie. Pour des pixels représentés par un vecteur de composantes, la différence entre deux valeurs de couleur est représentée, par exemple, par la norme $L^2$ de la différence entre chaque composante de même type de chacune des deux valeurs de couleur.

Dans un mode de réalisation, le procédé décrit en relation avec la Fig. 5 comprend une étape intermédiaire 53, entre l'étape 51 et l'étape 56. Un objectif de l'étape 53 est de filtrer, parmi les valeurs de couleur apparentes déterminées pour les sous-parties du document 1 lors de l'étape 51, des valeurs de couleur aberrantes. Il est connu, grâce au modèle de référence du document 1, que la valeur de couleur associée à chaque sous-partie du document 1 est égale à la première valeur de couleur prédéterminée. Par conséquent, même en cas de déformation géométrique ou colorimétrique, il est peu probable que les valeurs de couleur apparentes déterminées pour chaque sous-partie lors de l'étape 51 soient très différentes les unes des autres puisqu'elle dérive toutes de la première valeur de couleur prédéterminée, particulièrement lorsque les valeurs de couleurs apparentes sont associées à des sous-parties proches spatialement.

Une valeur de couleur apparente d'une première sous-partie est considérée comme aberrante lorsqu'elle est très différente d'une valeur de couleur représentative de valeurs de couleur apparentes de secondes sous-parties voisines de la première sous-partie. Une première valeur de couleur est très différente d'une deuxième valeur de couleur lorsqu'une différence entre la première et la deuxième valeur de couleur est supérieure à un seuil prédéterminé. Lorsque deux valeurs de couleur dont on souhaite calculer la différence sont chacune représentées par un vecteur de $K$ ($K$ > 1) composantes, une valeur représentative d'une différence est calculée sous forme d'une distance entre les deux valeurs de couleur dans une espace à $K$ dimensions ou chaque dimension représente une composante. Par exemple, lorsque les valeurs de couleur sont données dans l'espace colorimétrique RGB, la distance est calculée dans un espace à trois dimensions. On note qu'ici, une seconde sous-partie est une sous-partie du document 1 différente de la première sous-partie. Une seconde de sous-partie est voisine d'une première sous-partie lorsqu'elle est située à une distance inférieure à une distance prédéterminée de la première sous-partie. La distance prédéterminée peut être ajustée pour ne prendre en compte que des secondes sous-parties proches spatialement de la première sous-partie (par exemple les quatre secondes sous-parties les plus proches de la première sous-partie) ou toutes les sous-parties du document 1. Une prise en compte de secondes sous-parties proches spatialement permet de prendre en compte des spécificités locales des déformations géométriques et colorimétriques.

Dans un mode de réalisation, lors de l'étape 53, le module d'analyse 21 détermine une valeur de couleur moyenne (respectivement médiane) en calculant une moyenne (respectivement en déterminant une valeur médiane) des valeurs de couleur apparentes des secondes sous-parties du document 1 situé à la distance prédéterminée de la première sous-partie.

Lorsqu'une différence entre la valeur de couleur apparente de la première sous-partie et la valeur de couleur moyenne (respectivement médiane) est supérieure à un seuil prédéterminé, le module d'analyse 21 décide que la valeur de couleur apparente est aberrante et la remplace par la valeur de couleur moyenne (respectivement médiane).

Dans un mode de réalisation, lors de l'étape 53, le module d'analyse 21 détermine un modèle géométrique reliant une position d'un pixel dans l'image acquise à une valeur de couleur apparente dudit pixel. La valeur de couleur apparente dans l'image acquise correspond à la première valeur de couleur prédéterminée dans le modèle de référence du document 1. Le modèle géométrique est par exemple un modèle affine :

$$\begin{matrix} R \\ G \\ B \end{matrix} = M. \begin{matrix} X \\ Y \\ 1 \end{matrix}$$

où R, G et B sont trois composantes représentative d'une valeur de couleur d'un pixel situé à une position donnée par des coordonnés x et y dans l'image acquise et M est une matrice affine 3x3 :

$$M = \begin{matrix} M_{11} & M_{21} & M_{31} \\ M_{12} & M_{22} & M_{32} \\ M_{13} & M_{23} & M_{33} \end{matrix}$$

Les $M_{ij}$ sont des coefficients de la matrice affine M.

On suppose ici que l'image acquise est une image utilisant l'espace colorimétrique RGB. Dans ce cas, la valeur de couleur de chaque pixel de l'image acquise est représentée par trois composantes, une première composante, notée R représente une composante rouge, une deuxième composante, notée G, représentant un composante verte, et une troisième composante, noté *B*, représentant une composante bleue. Toutefois, l'image acquise pourrait utiliser d'autres espaces colorimétriques.

Comme nous le décrivons par la suite en relation avec la Fig. 6, une mise en oeuvre de l'étape 51 permet de déterminer un modèle de déformation géométrique du document 1 par rapport à son modèle de référence. Suite à la mise en oeuvre de l'étape 51 sur l'image acquise, la position dans l'image acquise de chaque sous-partie du document 1 sur laquelle une marque peut être appliquée est connue. De plus, une valeur de couleur apparente est associée à chacune desdites sous-parties, chaque sous-partie pouvant être associée à une couleur apparente différente, mais issue de la même première valeur de couleur prédéterminée dans le modèle de référence du document 1. En théorie, trois pixels de l'image acquise appartenant à une ou plusieurs sous-parties du document 1 sur lesquelles une marque peut être appliquée sont suffisants pour déterminer les coefficients $M_{ij}$ de la matrice affine *M*. Toutefois, une détermination de la matrice *M* à partir de trois pixels risquerait de donner des coefficients de matrice très bruités.

Dans un mode de réalisation, le module d'analyse 21 utilise un nombre de pixels supérieur à trois pour déterminer les coefficients $M_{ij}$ de la matrice affine *M*. Chaque pixel utilisé correspond à une sous-partie du document 1 sur laquelle une marque peut être appliquée.

Dans un mode de réalisation, le module d'analyse 21 utilise un ensemble de pixels, dit ensemble de pixels voisins, comprenant au moins un pixel de chaque sous-partie du document 1 sur laquelle une marque peut être appliquée pour déterminer les coefficients $M_{ij}$ de la matrice affine *M*. Une même matrice affine *M* est donc utilisée par le module d'analyse 21 pour déterminer si une valeur de couleur apparente déterminée pour une sous-partie est aberrante, quelle que soit la sous-partie du document 1.

Dans un mode de réalisation, une matrice affine *M* est déterminée par le module d'analyse 21 pour chaque sous-partie du document 1 sur laquelle une marque peut être appliquée. Dans ce mode de réalisation, le module d'analyse 21 utilise un ensemble de pixels, dit ensemble de pixels voisins, issus de sous-parties voisines de la sous-partie pour laquelle on souhaite déterminer si la valeur de couleur apparente est aberrante. Par exemple, le module d'analyse 21 utilise les quatre sous-parties les plus proches de la sous-partie pour laquelle on souhaite déterminer si la valeur de couleur apparente est aberrante.

Dans un mode de réalisation, la matrice affine *M* est déterminée à partir des pixels de l'ensemble de pixels voisins par une méthode de minimisation aux moindres carrés.

Dans un mode de réalisation, la matrice affine *M* est déterminée à partir des pixels de l'ensemble de pixels voisins par une méthode de type RANSAC (consensus par échantillon aléatoire, « RANdom SAmple Consensus » en terminologie anglo-saxonne).

Pour déterminer si la valeur de couleur apparente d'une sous-partie est aberrante, le module d'analyse 21 applique la matrice *M* aux coordonnés (*x*,*y*) d'au moins un pixel de l'image acquise correspondant à ladite sous-partie. De cette manière le module d'analyse 21 obtient une valeur de couleur théorique pour ladite sous-partie. Si une différence entre la valeur de couleur apparente et la valeur de couleur théorique est supérieure à un seuil prédéterminé, la valeur de couleur apparente est considérée aberrante par le module d'analyse 21 et remplacée par la valeur de couleur théorique.

Dans un mode de réalisation, le procédé décrit en relation avec la Fig. 5 comprend une étape intermédiaire 54, entre l'étape 51 et l'étape 56. Lorsque le procédé décrit en relation avec la Fig. 5 comprend l'étape 53, l'étape 54 suit l'étape 53.

Lors de l'étape 54, le module d'analyse 21, applique une correction sous forme de normalisation aux pixels de l'image acquise correspondant à chaque sous-partie du document 1 sur laquelle peut être appliquée une marque en fonction de la valeur de couleur apparente obtenue pour ladite sous-partie. Dans un mode de réalisation, la normalisation consiste à appliquer un facteur de normalisation dépendant de la valeur de couleur apparente associée à une sous-partie à chaque composante de pixel de ladite sous-partie. Dans un mode de réalisation, la valeur de couleur apparente est représentée par un vecteur de trois composantes ($R_{CA}$, $G_{CA}$, $B_{CA}$) dans l'espace colorimétrique RGB, et l'image acquise est une image RGB.

Dans un mode de réalisation, lors de la normalisation, chaque composante de chaque pixel d'une sous-partie est normalisée par rapport à la composante $R_{CA}$ (correspondant à la composante rouge) de la valeur de couleur apparente associée à ladite sous-partie. Ce type de normalisation est une balance des blancs appliquée dans un cas particulier où la première valeur de couleur prédéterminée est un blanc, c'est-à-dire une valeur de couleur ayant ses trois composantes approximativement égales dans l'exemple de l'espace colorimétrique RGB. Ainsi la composante rouge de chaque pixel d'une sous-partie est multipliée par un coefficient de normalisation $a_R = 1$, la composante verte de chaque pixel d'une sous-partie est multipliée par un coefficient de normalisation

$$a_G = \frac{R_{CA}}{G_{CA}};$$ , et la composante bleue de chaque pixel d'une sous-partie est multipliée par un coefficient de normalisation $$a_B = \frac{R_{CA}}{B_{CA}}.$$ .

Toutefois, dans d'autres modes de réalisation, chaque composante de chaque pixel d'une sous-partie pourrait être normalisée par rapport à une autre composante (ou à une pluralité d'autres composantes) de la valeur de couleur apparente. Par exemple, dans un autre mode de réalisation adapté quand la première valeur de couleur prédéterminée est une valeur de couleur correspondant à un blanc, $a_R = \dfrac{X}{R_{CA}}$, $a_G = \dfrac{\dot{X}}{G_{CA}}$ et $a_B = \dfrac{X}{B_{CA}}$ où

$$X = (R_{CA} + G_{CA} + B_{CA})/3.$$

Sachant qu'une valeur de composante est comprise dans une plage de valeurs limitée (par exemple comprise entre « 0 » et « 255 »), des méthodes connues permettent d'assurer qu'après normalisation, chaque composante reste dans cette plage de valeur. Suite à l'étape 54, les pixels de l'image acquise correspondant à des sous-parties du document 1 sur lesquelles des marques peuvent être appliquées sont des pixels corrigés par normalisation.

Dans un mode de réalisation, le procédé décrit en relation avec la Fig. 5 comprend une étape intermédiaire 55, entre l'étape 51 et l'étape 56. Lorsque le procédé décrit en relation avec la Fig. 5 comprend les étapes 52, 53 et 54, l'étape 55 suit les étapes 53 et 54. Le mode de réalisation de l'étape 55 est adapté au cas où chaque sous-partie du document 1 sur laquelle une marque peut être appliquée est une case délimitée par un contour. La position dans l'image acquise des pixels correspondant au contour de chaque case du document 1 est connue grâce au modèle de déformation déterminé lors de l'étape 51 et au modèle de référence du document 1. L'étape 55 est particulièrement avantageuse lorsque les déformations colorimétriques ont été provoquées, au moins en partie, par des dérives colorimétriques lors d'une impression du document 1.

Un objectif de l'étape 55 est de corriger des déformations colorimétriques par rapport à des valeurs de couleur des pixels correspondant au contour d'une case. Corriger ces déformations colorimétriques peut permettre, par exemple, de mieux identifier les cases dans le document 1. Ceci peut alors être utilisé dans un processus itératif ou les étapes 51, 53, 54 et 55 sont itérées plusieurs fois.

Lors de l'étape 55, pour chaque case du document 1, le module d'analyse 21 détermine une valeur de couleur, dite valeur de couleur de contour, représentative des valeurs de couleur des pixels du contour de ladite case. Dans un mode de réalisation, la valeur de couleur d'un contour est la valeur de couleur apparaissant le plus souvent parmi les pixels de l'image acquise correspondant au contour. La valeur de couleur apparaissant le plus souvent dans un ensemble de pixels peut être obtenue en établissant un histogramme à $K$ dimensions des valeurs de couleur des pixels dudit ensemble. Chaque dimension de l'histogramme à $K$ dimensions représente une composante de pixel. Dans le cas d'une image dans l'espace couleur RGB, chaque pixel possède « 3 » composantes. L'histogramme est donc un histogramme à trois dimensions. La valeur de couleur apparaissant le plus souvent parmi les pixels de l'ensemble de pixel apparaît sous forme d'un pic dans l'histogramme plus élevé que tout autre pic éventuel de l'histogramme.

Suite à la détermination de la valeur de couleur de contour, le module d'analyse 21 corrige la valeur de couleur de chaque pixel dudit contour et/ou de chaque pixel situé à l'intérieur du contour en utilisant la valeur de couleur de contour et une valeur de couleur des pixels du contour donnée par le modèle de référence du document 1.

Pour ce faire, le module d'analyse 21 met en oeuvre un procédé décrit en relation avec la Fig. 7.

La **Fig. 7** illustre schématiquement un procédé de correction basé sur des valeurs de couleur d'un contour d'une case.

Dans une étape 541, le module d'analyse 21 modifie l'espace de couleur dans lequel sont représentés des pixels cibles. Dans le cas de l'étape 55, les pixels cibles correspondent au contour de la case et/ou sont situés à l'intérieur du contour. Un objectif de l'étape 541 est de représenter les pixels cibles dans un espace colorimétrique dans lequel une teinte d'un pixel est représentée sur un minimum de composantes. Par exemple, les pixels cibles, initialement représentés dans l'espace colorimétrique RGB, sont représentés dans l'espace colorimétrique TSV (Teinte, Saturation, Valeur, « HSV (Hue Saturation Value) » en terminologie anglo-saxonne). Dans l'espace colorimétrique TSV, un pixel est représenté par trois composantes : une première composante, notée $T$, représentant la teinte du pixel, une deuxième composante, notée S, représentative d'une intensité du pixel et une troisième composante, notée $V$, représentative d'une brillance du pixel. La composante $T$, représentée généralement par une région circulaire, concentre l'essentielle des informations de couleur du pixel. Par conséquent, il est possible de n'agir que sur la composante de teinte $T$ pour corriger une couleur d'un pixel. Lors de l'étape 541, chaque pixel cible est transformé pour être représenté dans l'espace TSV.

Dans une étape 542, chaque pixel cible est corrigé. Pour ce faire, le module d'analyse utilise une valeur de couleur $P_r$ représentative des valeurs de couleur des pixels cibles et une valeur de couleur $P_m$ des pixels cibles donnée par le modèle de référence du document 1. Dans le cadre de l'étape 55 la valeur de couleur $P_r$ est la valeur de couleur de contour de la case et la valeur de couleur $P_m$ est la valeur de couleur des pixels du contour donnée par le modèle de référence du document 1. Les valeurs de couleur $P_r$ et $P_m$ sont elles aussi transformées pour être représentées dans l'espace TSV. Ainsi, les composantes de la valeur de couleur $P_r$ dans l'espace TSV sont notées $(T_r, S_r, V_r)$, les composantes de la valeur de couleur $P_m$ dans l'espace TSV sont notées $(T_m, S_m, V_m)$ et les composantes d'un pixel cible dans l'espace TSV sont notées $(t, s, v)$.

Lors de l'étape 542, chaque composante de teinte $t$ d'un pixel cible est transformé en une composante de teinte corrigée $t_{cor}$ de la manière suivante :

$$t_{cor} = t - T_r + T_m$$

Après la correction de la composante de teinte, chaque pixel cible ainsi corrigé, est retransformé pour être à nouveau représenté dans l'espace colorimétrique RGB.

Dans un mode de réalisation, un utilisateur choisi d'appliquer la correction décrite en relation avec la Fig. 7 aux pixels correspondant au contour, aux pixels situés à l'intérieur du contour ou aux pixels correspondant au contour et aux pixels situés à l'intérieur du contour, par exemple, en configurant le système 2.

Dans un mode de réalisation, les étapes 50, 51, 53, 54 et 55 sont mises en oeuvre sans l'étape 56. Dans ce cas, le procédé décrit en relation avec la Fig. 5 est un procédé de correction, au moins local, de l'image acquise.

Dans un mode de réalisation du procédé permettant de déterminer qu'une marque a été appliquée sur au moins une sous-partie d'un document comprenant les étapes 50, 51 et 53 à 56 et du procédé de correction comprenant les étapes 50, 51 et 53 à 55 comprennent une étape 52 suivant l'étape 51. Lors de l'étape 52, le module d'analyse 21 applique une correction aux pixels de chaque sous-partie dépendante de la couleur apparente obtenue. La correction mise en oeuvre lors de l'étape 52 vise à compenser un écart entre la valeur de couleur apparente estimée et la première valeur de couleur prédéterminée.

Lors de l'étape 52, pour chaque sous-partie du document 1, le module d'analyse 21 détermine une valeur de couleur représentative des valeurs de couleur des pixels de ladite sous-partie dans l'image acquise. Dans un mode de réalisation, la valeur de couleur représentative des valeurs de couleur des pixels de ladite sous-partie est la valeur de couleur apparaissant le plus souvent parmi les pixels la sous-partie. Comme dans l'étape 55, la valeur de couleur apparaissant le plus souvent parmi les pixels la sous-partie est obtenue à partir d'un histogramme à $K$ dimensions des valeurs de couleur des pixels de ladite sous-partie. Suite à la détermination de la valeur de couleur représentative des valeurs de couleur des pixels de ladite sous-partie, le module d'analyse 21 corrige la valeur de couleur de chaque pixel de ladite sous-partie en utilisant la valeur de couleur représentative des valeurs de couleur des pixels de ladite sous-partie et la valeur de couleur apparente. Pour ce faire, le module d'analyse 21 met en oeuvre le procédé décrit en relation avec la Fig. 7. Dans le cadre de l'étape 52, les pixels cibles sont les pixels de ladite sous-partie, la valeur de couleur $P_r$ est la valeur de couleur représentative des valeurs de couleur des pixels de ladite sous-partie et la valeur de couleur $P_m$ est la valeur de couleur apparente.

Les étapes 52 et 54 peuvent être combinées pour former une seule étape de correction, la normalisation étant considérée comme une correction.

La **Fig. 6** illustre schématiquement un procédé de détermination d'une valeur de couleur apparente de pixels correspondant à une sous-partie d'un objet sur laquelle une marque peut être appliquée.

Le procédé décrit en relation avec la Fig. 6 est mis en oeuvre lors de l'étape 51.

Dans une étape 511, le module d'analyse 21 estime un modèle de déformation géométrique du document 1 dans l'image acquise par rapport au modèle de référence du document 1. Pour ce faire il applique un procédé d'estimation d'un modèle de déformation géométrique d'un objet décrit dans la demande de brevet FR1459742 ou le procédé décrit dans le brevet FR 2952218. On note que, dans un mode de réalisation, l'étape 511 est mise en oeuvre une seule fois, quel que soit le nombre de sous-parties sur lesquelles une marque peut être appliquée comprises dans le document 1.

Suite à l'étape 511, le module d'analyse 21 met en oeuvre des étapes 512, 513 et 514. Lorsque le document à traiter comprend plus d'une sous-partie sur laquelle peut être appliquée une marque, les étapes 512, 513 et 514 sont répétées pour chaque sous- partie. Les étapes 512, 513 et 514 sont expliquées par la suite pour une sous-partie du document 1 sur laquelle peut être appliquée une marque, mais sont appliquées de la même manière à chaque sous partie du document 1 sur laquelle peut être appliquée une marque.

Lors de l'étape 512, à partir du modèle de déformation géométrique et du modèle de référence de l'objet, le module d'analyse 21 détermine une position dans l'image acquise de la sous-partie sur laquelle peut être appliquée une marque en cours de traitement. Pour ce faire, chaque pixel de ladite sous-partie est projeté depuis une position donnée par le modèle de référence du document 1 vers une position dans l'image acquise en utilisant le modèle de déformation géométrique.

Lorsqu'on est certain qu'aucune marque n'a été appliquée sur la sous-partie en cours de traitement, il est possible de déterminer la valeur de couleur apparente des pixels de ladite sous-partie en observant des pixels de l'image acquise situés à l'intérieur de ladite sous-partie, par exemple à l'intérieur d'une case. Mais, par définition chaque sous-partie analysée par le procédé décrit en relation avec la Fig. 6 est une sous-partie sur laquelle une marque a pu être appliquée. On ne peut donc pas se fier à des couleurs de pixels observées dans la sous-partie en cours de traitement pour déterminer la valeur de couleur apparente de ladite sous-partie. Le module d'analyse 21 va donc s'appuyer sur d'autres zones du document 1 qui, dans le modèle de référence du document 1, sont associées à une seconde valeur de couleur prédéterminée, dont un écart $\Delta$ ($\Delta \geq 0$) avec la valeur de couleur de ladite sous-partie (i.e. dont un écart $\Delta$ avec la première valeur de couleur prédéterminée) est connue pour déterminer la valeur de couleur apparente de ladite sous-partie, ces zones du document 1 n'étant pas destinées à recevoir une marque. On appelle par la suite une zone du document 1 non destinée à recevoir une marque et associée à une seconde couleur prédéterminée, une zone vierge.

Lors de l'étape 513, le module d'analyse 21 détermine, à partir du modèle de déformation géométrique et du modèle de référence du document 1, une zone de l'image acquise, dite zone de référence, située dans un voisinage prédéterminé de la sous-partie en cours de traitement. Chaque pixel de la zone de référence est issu d'une projection dans l'image acquise d'une zone vierge, la zone vierge étant associée, dans le modèle de référence, à une seconde valeur de couleur prédéterminée dont l'écart $\Delta$ avec la première valeur de couleur prédéterminée est connu. Puisque les déformations colorimétriques peuvent être inégales dans un document, le voisinage prédéterminé est choisi proche de la sous-partie. Ainsi, si une sous-partie est affectée par une déformation colorimétrique, il est très probable que la zone de référence soit affectée de la même déformation colorimétrique. Par exemple, la zone de référence est un ensemble de pixels connexes de l'image acquise, n'intersectant aucune sous-partie du document 1, mais touchant la sous-partie en cours de traitement. La zone de référence est par exemple de forme carrée, rectangulaire, circulaire ou quelconque. Si par exemple, la sous-partie en cours de traitement est une case, l'ensemble de pixels correspondant à la zone de référence touche le contour de la case mais le contour et la zone de référence n'ont aucun pixel en commun.

Dans une étape 514, le module d'analyse 21 détermine une valeur de couleur apparente des pixels de la sous-partie, correspondant à la première valeur de couleur prédéterminée, à partir d'une valeur de couleur d'au moins un pixel de la zone de référence.

Dans un mode de réalisation, lorsque la première et la seconde valeur prédéterminées sont égales (l'écart $\Delta = 0$), la valeur de couleur apparente est une valeur de couleur d'un pixel de la zone de référence, ou une moyenne des valeurs des pixels de la zone de référence.

Dans une mode de réalisation, lorsque la première et la seconde valeur prédéterminées sont égales (l'écart $\Delta = 0$), la valeur de couleur apparente est la valeur de couleur apparaissant le plus souvent parmi les pixels de la zone de référence. La valeur de couleur apparaissant le plus souvent parmi les pixels de la zone de référence peut être déterminée à l'aide d'un histogramme à $K$ dimensions tel que décrit en relation avec l'étape 55.

Dans un mode de réalisation, lorsque la première et la seconde valeur prédéterminées sont différentes (l'écart $\Delta \neq 0$), la valeur de couleur apparente est une somme entre la valeur de couleur d'un pixel de la zone de référence et l'écart $\Delta$, ou une somme entre la moyenne des valeurs des pixels de la zone de référence et l'écart $\Delta$.

Dans un mode de réalisation, lorsque la première et la seconde valeur prédéterminées sont différentes (l'écart $\Delta \neq 0$), la valeur de couleur apparente est une somme entre la valeur de couleur apparaissant le plus souvent parmi les pixels de la zone de référence et l'écart $\Delta$.

**Revendications**

1. Procédé de détermination d'une valeur de couleur apparente de pixels correspondant à une sous-partie d'un document destinée à recevoir des marques représenté dans une image, dite image acquise, **caractérisé en ce que** le procédé comprend :

estimer (511) un modèle de déformation géométrique dudit document dans l'image acquise par rapport à un modèle de référence du document ;
à partir du modèle de déformation géométrique et du modèle de référence du document, déterminer (512) une position dans l'image acquise de la sous-partie et déterminer (513) une zone de l'image acquise, dite zone de référence, située dans un voisinage prédéterminé de la sous-partie, chaque pixel de la zone de référence étant issu d'une projection dans l'image acquise d'une zone du modèle de référence du document non destinée à recevoir une marque, dite zone vierge, la zone vierge étant associée à une seconde valeur de couleur prédéterminée dans le modèle de référence du document, ladite seconde valeur de couleur prédéterminée ayant un écart connu avec une première valeur de couleur prédéterminée associée à la sous-partie dans le modèle de référence du document, la projection utilisant le modèle de déformation géométrique ; et,
déterminer (514) une valeur de couleur apparente des pixels de la sous-partie, à partir d'une valeur de couleur d'au moins un pixel de la zone de référence et dudit écart.

2. Procédé permettant de déterminer qu'une marque a été appliquée sur une sous-partie d'un document, ledit document comprenant au moins une sous-partie sur laquelle une marque peut être appliquée, une image représentative du document, dite image acquise, ayant été acquise (50) par un dispositif d'acquisition d'images (2), **caractérisé en ce que** le procédé comprend les étapes suivantes :

pour chaque sous partie du document sur laquelle une marque peut être appliquée, déterminer (51) une valeur de couleur apparente des pixels de l'image acquise correspondant à la sous-partie en appliquant le procédé selon la revendication 1 à la sous-partie ; et,
décider (56), pour chaque-sous partie du document sur laquelle une marque peut être appliquée, qu'une marque a été appliquée sur ladite sous-partie lorsqu'une proportion de pixels correspondant à la sous-partie ayant une valeur de couleur, dite valeur de couleur de pixel, proche de la valeur de couleur apparente est inférieure à un premier seuil prédéterminé, une valeur de couleur de pixel étant proche de la valeur de couleur apparente lorsqu'une différence entre ladite valeur de couleur de pixel et la valeur de couleur apparente est inférieure à une différence prédéterminée.

3. Procédé selon la revendication 2 **caractérisé en ce que** le procédé comprend en outre appliquer (52, 54) une correction aux pixels de l'image acquise correspondant à chaque sous-partie du document sur laquelle peut être appliquée une marque en fonction de la valeur de couleur apparente obtenue pour ladite sous-partie, chaque pixel sur lequel une correction est appliquée devenant un pixel corrigé, chaque pixel pris en compte pour déterminer si la proportion de pixels correspondant à la sous-partie ayant une valeur de couleur de pixel proche de la valeur de couleur apparente est inférieure au premier seuil prédéterminé étant un pixel corrigé.

4. Procédé selon la revendication 3, **caractérisé en ce que**, la correction appliquée aux pixels de l'image acquise correspondant à une sous-partie du document sur laquelle une marque peut être appliquée (54) comprend appliquer un facteur de normalisation différent à chaque composante de chacun desdits pixels, chaque facteur de normalisation étant calculé à partir de la valeur de couleur apparente associée à ladite sous-partie.

5. Procédé selon la revendication 2, 3 ou 4, **caractérisé en ce que** le procédé comprend, en outre, filtrer (53), parmi les valeurs de couleur apparentes déterminées pour chaque sous-partie du document sur laquelle une marque peut être appliquée, des valeurs de couleur aberrantes, une valeur de couleur apparente d'une première sous-partie d'un document étant considérée comme aberrante lorsqu'une différence entre la valeur de couleur apparente et une valeur de couleur, dite valeur de couleur de voisinage, représentative de valeurs de couleur apparentes de secondes sous-parties, voisines de la première sous-partie, est supérieure à un deuxième seuil prédéterminé, une seconde sous-partie étant voisine d'une première sous-partie lorsqu'une distance entre la première et la seconde sous-partie est inférieure à une distance prédéterminée, la valeur de couleur apparente associée à une sous-partie étant remplacée par la valeur de couleur de voisinage lorsque la valeur de couleur apparente est une valeur de couleur aberrante.

6. Procédé selon l'une quelconque des revendications 2 à 5, **caractérisé en ce que** chaque sous partie du document est une case délimitée par un contour et **en ce que** le procédé comprend en outre pour chaque case du document :

   déterminer, à partir du modèle de déformation et du modèle de référence du document, une position de chaque pixel correspondant au contour de la case ;
   déterminer une valeur de couleur, dite valeur de couleur de contour, représentative de valeurs de couleur de pixels dudit contour ; et,
   corriger la valeur de couleur de chaque pixel dudit contour et/ou de chaque pixel situé à l'intérieur du contour en utilisant la valeur de couleur de contour et une valeur de couleur des pixels du contour donnée par le modèle de référence du document.

7. Procédé selon la revendication 6, **caractérisé en ce que** lors d'une correction d'un pixel dudit contour ou d'un pixel situé à l'intérieur du contour, le pixel est transformé de manière à le représenter dans un espace colorimétrique dans lequel chaque pixel est associé à des composantes comprenant une composante teinte, la correction consistant à modifier la composante de teinte en utilisant une composante de teinte issue de la valeur de couleur de contour et une composante de teinte issue de la valeur de couleur des pixels du contour donnée par le modèle de référence du document.

8. Procédé de correction d'une image, dite image acquise, d'un document, ledit document comprenant au moins une sous-partie sur laquelle une marque peut être appliquée, **caractérisé en ce que** le procédé comprend les étapes suivantes :

   pour chaque sous partie du document sur laquelle une marque peut être appliquée, déterminer (51) une valeur de couleur apparente des pixels de l'image acquise correspondant à la sous-partie en appliquant le procédé selon la revendication 1 à la sous-partie ; et,
   appliquer une correction aux pixels de l'image acquise correspondant à chaque sous-partie du document en fonction de la valeur de couleur apparente obtenue pour ladite sous-partie.

9. Procédé selon la revendication 8, **caractérisé en ce que**, la correction appliquée aux pixels de l'image acquise correspondant à une sous-partie du document comprend appliquer un facteur de normalisation différent à chaque composante de chacun desdits pixels, chaque facteur de pondération étant calculé à partir de la valeur de couleur apparente associée à ladite sous-partie.

**10.** Procédé selon la revendication 8 ou 9, **caractérisé en ce que** le procédé comprend, en outre, filtrer (53), parmi les valeurs de couleur apparentes déterminées pour chaque sous-partie du document sur laquelle une marque peut être appliquée, des valeurs de couleur aberrantes, une valeur de couleur apparente d'une première sous-partie étant considérée comme aberrante lorsqu'une différence entre la valeur de couleur apparente et une valeur de couleur, dite valeur de couleur de voisinage, représentative de valeurs de couleur apparentes de secondes sous-parties, voisines de la première sous-partie, est supérieure à un seuil prédéterminé, une seconde sous-partie étant voisine d'une première sous-partie lorsqu'une distance entre la première et la seconde sous-partie est inférieure à une distance prédéterminée, la valeur de couleur apparente associée à une sous-partie étant remplacée par la valeur de couleur de voisinage lorsque la valeur de couleur apparente est une valeur de couleur aberrante.

**11.** Procédé selon l'une quelconque des revendications 8 à 10, **caractérisé en ce que** chaque sous partie du document est une case délimitée par un contour et **en ce que** le procédé comprend en outre pour chaque case du document :

déterminer, à partir du modèle de déformation et du modèle de référence du document, une position de chaque pixel correspondant au contour de la case ;
déterminer une valeur de couleur, dite valeur de couleur de contour, représentative de valeurs de couleur de pixels dudit contour ; et,
corriger la valeur de couleur de chaque pixel dudit contour et/ou de chaque pixel situé à l'intérieur du contour en utilisant la valeur de couleur de contour et une valeur de couleur des pixels du contour donnée par le modèle de référence du document.

**12.** Procédé selon la revendication 11, **caractérisé en ce que** lors d'une correction d'un pixel dudit contour ou d'un pixel situé à l'intérieur du contour, le pixel est transformé de manière à le représenter dans un espace colorimétrique dans lequel chaque pixel est associé à des composantes comprenant une composante de teinte, la correction consistant à modifier la composante de teinte en utilisant une composante de teinte issue de la valeur de couleur de contour et une composante de teinte issue de la valeur de couleur des pixels du contour donnée par le modèle de référence du document.

**13.** Dispositif (21) comprenant des moyens pour mettre en oeuvre le procédé selon la revendication 1 ou selon l'une quelconque des revendications 2 à 7 ou selon l'une quelconque des revendications 8 à 12.

**14.** Système d'acquisition d'images comprenant un dispositif selon la revendication 13.

**15.** Programme d'ordinateur, **caractérisé en ce qu'**il comprend des instructions pour mettre en oeuvre, par un dispositif (21), le procédé selon la revendication 1, ou le procédé selon l'une quelconque des revendications 2 à 7 ou le procédé selon l'une quelconque des revendications 8 à 12, lorsque ledit programme est exécuté par un processeur (211) dudit dispositif (21).

**16.** Moyens de stockage, **caractérisés en ce qu'**ils stockent un programme d'ordinateur comprenant des instructions pour mettre en oeuvre, par un dispositif (21), le procédé selon la revendication 1, ou le procédé selon l'une quelconque des revendications 2 à 7 ou le procédé selon l'une quelconque des revendications 8 à 12, lorsque ledit programme est exécuté par un processeur (211) dudit dispositif (21).

**Patentansprüche**

**1.** Verfahren zum Bestimmen eines scheinbaren Farbwerts von Pixeln entsprechend einem Teilabschnitt eines Dokuments, der dazu bestimmt ist, mit Markierungen versehen zu werden, die in einem als erfasstes Bild bezeichneten Bild dargestellt sind, **dadurch gekennzeichnet, dass** das Verfahren umfasst:

Schätzen (511) eines geometrischen Verzerrungsmodells des genannten Dokuments in dem erfassten Bild mit Bezug auf ein Referenzmodell des Dokuments;
auf der Basis des geometrischen Verzerrungsmodells und des Referenzmodells des Dokuments, Bestimmen (512) einer Position in dem erfassten Bild des Teilabschnitts und Bestimmen (513) einer als Referenzzone bezeichneten Zone des erfassten Bilds, die sich in einem vorbestimmten Umfeld des Teilabschnitts befindet, wobei jedes Pixel der Referenzzone aus einer Projektion in dem erfassten Bild einer Zone des Referenzmodells des Dokuments, die nicht dazu bestimmt ist, mit einer Markierung versehen zu werden, die als Leerzone bezeichnet wird, resultiert, wobei die Leerzone mit einem zweiten vorbestimmten Farbwert in dem Referenzmodell des Dokuments assoziiert ist, wobei der genannte zweite vorbestimmte Farbwert einen bekannten Abstand von einem ersten vorbestimmten Farbwert aufweist, der mit dem Teilabschnitt in dem Referenzmodell des Dokuments assoziiert ist, wobei die Projektion das geometrische Verzerrungsmodell verwendet; und
Bestimmen (514) eines scheinbaren Farbwerts der Pixel des Teilabschnitts, auf der Basis eines Farbwerts mindestens eines Pixels der Referenzzone und des genannten Abstands.

2. Verfahren zum Bestimmen, dass eine Markierung auf einem Teilabschnitt eines Dokuments aufgebracht wurde, wobei das genannte Dokument mindestens einen Teilabschnitt umfasst, worauf eine Markierung aufgebracht werden kann, wobei ein das Dokument darstellendes, als erfasstes Bild bezeichnetes Bild von einer Bilderfassungsvorrichtung (2) erfasst (50) worden ist, **dadurch gekennzeichnet, dass** das Verfahren die folgenden Schritte umfasst:

    für jeden Teilabschnitt des Dokuments, worauf eine Markierung aufgebracht werden kann, Bestimmen (51) eines scheinbaren Farbwerts der Pixel des erfassten Bilds entsprechend dem Teilabschnitt durch Anwenden des Verfahrens nach Anspruch 1 auf den Teilabschnitt; und Entscheiden (56), für jeden Teilabschnitt des Dokuments, worauf eine Markierung aufgebracht werden kann, dass eine Markierung auf dem genannten Teilabschnitt aufgebracht wurde, wenn ein Anteil von Pixeln entsprechend dem Teilabschnitt mit einem als Pixelfarbwert bezeichneten Farbwert, nahe dem scheinbaren Farbwert, unterhalb einer ersten vorbestimmten Schwelle ist, wobei ein Pixelfarbwert nahe dem scheinbaren Farbwert ist, wenn eine Differenz zwischen dem genannten Pixelfarbwert und dem scheinbaren Farbwert weniger als eine vorbestimmte Differenz ist.

3. Verfahren nach Anspruch 2, **dadurch gekennzeichnet, dass** das Verfahren ferner das Anwenden (52, 54) einer Korrektur auf die Pixel des erfassten Bilds entsprechend jedem Teilabschnitt des Dokuments, worauf eine Markierung gemäß dem für den genannten Teilabschnitt erhaltenen scheinbaren Farbwert aufgebracht werden kann, umfasst, wobei jedes Pixel, worauf eine Korrektur angewendet wird, ein korrigiertes Pixel wird, wobei jedes Pixel, das bei der Bestimmung dessen berücksichtigt wird, ob der Anteil von Pixeln entsprechend dem Teilabschnitt mit einem Pixelfarbwert nahe dem scheinbaren Farbwert unterhalb der ersten vorbestimmten Schwelle ist, ein korrigiertes Pixel ist.

4. Verfahren nach Anspruch 3, **dadurch gekennzeichnet, dass** die Korrektur, die auf die Pixel des erfassten Bilds entsprechend einem Teilabschnitt des Dokuments angewendet wird, worauf eine Markierung aufgebracht (54) werden kann, das Anwenden eines unterschiedlichen Normalisierungsfaktors auf jede Komponente jedes der genannten Pixel umfasst, wobei jeder Normalisierungsfaktor auf der Basis des mit dem genannten Teilabschnitt assoziierten scheinbaren Farbwerts berechnet wird.

5. Verfahren nach Anspruch 2, 3 oder 4, **dadurch gekennzeichnet, dass** das Verfahren ferner das Filtern (53), unter den für jeden Teilabschnitt des Dokuments bestimmten scheinbaren Farbwerten, worauf eine Markierung aufgebracht werden kann, von aberranten Farbwerten umfasst, wobei ein scheinbarer Farbwert eines ersten Teilabschnitts eines Dokuments als aberrant betrachtet wird, wenn eine Differenz zwischen dem scheinbaren Farbwert und einem als Umfeldfarbwert bezeichneten Farbwert, der scheinbare Farbwerte zweiter Teilabschnitte, neben dem ersten Teilabschnitt, darstellt, oberhalb einer zweiten vorbestimmten Schwelle ist, wobei ein zweiter Teilabschnitt neben einem ersten Teilabschnitt ist, wenn ein Abstand zwischen dem ersten und dem zweiten Teilabschnitt weniger als ein vorbestimmter Abstand ist, wobei der scheinbare Farbwert, der mit einem Teilabschnitt assoziiert ist, durch den Umfeldfarbwert ersetzt wird, wenn der scheinbare Farbwert ein aberranter Farbwert ist.

6. Verfahren nach einem der Ansprüche 2 bis 5, **dadurch gekennzeichnet, dass** jeder Teilabschnitt des Dokuments ein von einer Kontur begrenztes Kästchen ist, und dadurch, dass das Verfahren, für jedes Kästchen des Dokuments, ferner umfasst:

    Bestimmen, auf der Basis des Verzerrungsmodells und des Referenzmodells des Dokuments, einer Position jedes Pixels entsprechend der Kontur des Kästchens;
    Bestimmen eines als Konturfarbwert bezeichneten Farbwerts, der Farbwerte von Pixeln der genannten Kontur darstellt; und
    Korrigieren des Farbwerts jedes Pixels der genannten Kontur und/oder jedes im Inneren der Kontur befindlichen Pixels unter Verwendung des Konturfarbwerts und eines Farbwerts der Pixel der Kontur, der von dem Referenzmodell des Dokuments angegeben wird.

7. Verfahren nach Anspruch 6, **dadurch gekennzeichnet, dass**, wenn ein Pixel der genannten Kontur oder ein im Inneren der Kontur befindliches Pixel korrigiert wird, das Pixel so transformiert wird, dass es in einem farbmetrischen Raum dargestellt ist, in dem jedes Pixel mit Komponenten assoziiert ist, die eine Farbtonkomponente umfassen, wobei die Korrektur darin besteht, die Farbtonkomponente unter Verwendung einer Farbtonkomponente zu modifizieren, die aus dem Konturfarbwert stammt, und einer Farbtonkomponente, die aus dem Farbwert der Pixel der Kontur, der von dem Referenzmodell des Dokuments angegeben wird, stammt.

8. Verfahren zum Korrigieren eines als erfasstes Bild bezeichneten Bilds eines Dokuments, wobei das genannte Dokument mindestens einen Teilabschnitt umfasst, worauf eine Markierung aufgebracht werden kann, **dadurch gekennzeichnet, dass** das Verfahren die folgenden Schritte umfasst:

für jeden Teilabschnitt des Dokuments, worauf eine Markierung aufgebracht werden kann, Bestimmen (51) eines scheinbaren Farbwerts der Pixel des erfassten Bilds entsprechend dem Teilabschnitt durch Anwenden des Verfahrens nach Anspruch 1 auf den Teilabschnitt; und Anwenden einer Korrektur auf die Pixel des erfassten Bilds entsprechend jedem Teilabschnitt des Dokuments gemäß dem für den genannten Teilabschnitt erhaltenen scheinbaren Farbwert.

9. Verfahren nach Anspruch 8, **dadurch gekennzeichnet, dass** die Korrektur, die auf die Pixel des erfassten Bilds entsprechend einem Teilabschnitt des Dokuments angewendet wird, das Anwenden eines unterschiedlichen Normalisierungsfaktors auf jede Komponente jedes der genannten Pixel umfasst, wobei jeder Gewichtungsfaktor auf der Basis des mit dem genannten Teilabschnitt assoziierten scheinbaren Farbwerts berechnet wird.

10. Verfahren nach Anspruch 8 oder 9, **dadurch gekennzeichnet, dass** das Verfahren ferner das Filtern (53), unter den für jeden Teilabschnitt des Dokuments bestimmten scheinbaren Farbwerten, worauf eine Markierung aufgebracht werden kann, von aberranten Farbwerten umfasst, wobei ein scheinbarer Farbwert eines ersten Teilabschnitts als aberrant betrachtet wird, wenn eine Differenz zwischen dem scheinbaren Farbwert und einem als Umfeldfarbwert bezeichneten Farbwert, der scheinbare Farbwerte zweiter Teilabschnitte, neben dem ersten Teilabschnitt, darstellt, oberhalb einer vorbestimmten Schwelle ist, wobei ein zweiter Teilabschnitt neben einem ersten Teilabschnitt ist, wenn ein Abstand zwischen dem ersten und dem zweiten Teilabschnitt weniger als ein vorbestimmter Abstand ist, wobei der scheinbare Farbwert, der mit einem Teilabschnitt assoziiert ist, durch den Umfeldfarbwert ersetzt wird, wenn der scheinbare Farbwert ein aberranter Farbwert ist.

11. Verfahren nach einem der Ansprüche 8 bis 10, **dadurch gekennzeichnet, dass** jeder Teilabschnitt des Dokuments ein von einer Kontur begrenztes Kästchen ist, und dadurch, dass das Verfahren, für jedes Kästchen des Dokuments, ferner umfasst:

Bestimmen, auf der Basis des Verzerrungsmodells und des Referenzmodells des Dokuments, einer Position jedes Pixels entsprechend der Kontur des Kästchens;

Bestimmen eines als Konturfarbwert bezeichneten Farbwerts, der Farbwerte von Pixeln der genannten Kontur darstellt; und
Korrigieren des Farbwerts jedes Pixels der genannten Kontur und/oder jedes im Inneren der Kontur befindlichen Pixels unter Verwendung des Konturfarbwerts und eines Farbwerts der Pixel der Kontur, der von dem Referenzmodell des Dokuments angegeben wird.

12. Verfahren nach Anspruch 11, **dadurch gekennzeichnet, dass**, wenn ein Pixel der genannten Kontur oder ein im Inneren der Kontur befindliches Pixel korrigiert wird, das Pixel so transformiert wird, dass es in einem farbmetrischen Raum dargestellt ist, in dem jedes Pixel mit Komponenten assoziiert ist, die eine Farbtonkomponente umfassen, wobei die Korrektur darin besteht, die Farbtonkomponente unter Verwendung einer Farbtonkomponente zu modifizieren, die aus dem Konturfarbwert stammt, und einer Farbtonkomponente, die aus dem Farbwert der Pixel der Kontur, der von dem Referenzmodell des Dokuments angegeben wird, stammt.

13. Vorrichtung (21), umfassend Mittel zum Implementieren des Verfahrens nach Anspruch 1 oder nach einem der Ansprüche 2 bis 7 oder nach einem der Ansprüche 8 bis 12.

14. Bilderfassungssystem, umfassend eine Vorrichtung nach Anspruch 13.

15. Computerprogramm, **dadurch gekennzeichnet, dass** es Anweisungen für die Implementierung, durch eine Vorrichtung (21), des Verfahrens nach Anspruch 1 oder des Verfahrens nach einem der Ansprüche 2 bis 7 oder des Verfahrens nach einem der Ansprüche 8 bis 12 umfasst, wenn das genannte Programm von einem Prozessor (211) der genannten Vorrichtung (21) ausgeführt wird.

16. Speichermittel, **dadurch gekennzeichnet, dass** sie ein Computerprogramm speichern, das Anweisungen für die Implementierung, durch eine Vorrichtung (21), des Verfahrens nach Anspruch 1 oder des Verfahrens nach einem der Ansprüche 2 bis 7 oder des Verfahrens nach einem der Ansprüche 8 bis 12 umfasst, wenn das genannte Programm von einem Prozessor (211) der genannten Vorrichtung (21) ausgeführt wird.

**Claims**

1. Method for determining an apparent colour value of pixels corresponding to a subpart of a document designed for receiving marks represented in an image, referred to as the acquired image, **characterised in**

**that** the method comprises:

estimating (511) a geometric distortion model of said document in the acquired image compared with a reference model of the document; from the geometric distortion model and the reference model of the document, determining (512) a position in the acquired image of the subpart and determining (513) a zone of the acquired image, referred to as the reference zone, situated in a predetermined vicinity of the subpart, each pixel of the reference zone resulting from a projection in the acquired image of a zone of the reference model of the document not designed for receiving marks, referred to as a blank zone, the blank zone being associated with a second predetermined colour value in the reference model of the document, said second predetermined colour value having a known difference with respect to the first predetermined colour value associated with the subpart in the reference model of the document, the projection using the geometric distortion model; and determining (514) an apparent colour value of the pixels of the subpart, from a colour value of at least one pixel of the reference zone and said difference.

2. Method for determining that a mark has been applied to a subpart of a document, said document comprising at least one subpart on which a mark can be applied, an image representing the document, referred to as the acquired image, having been acquired (50) by an image acquisition device (2), **characterised in that** the method comprises the following steps:

for each subpart of the document on which a mark can be applied, determining (51) an apparent colour value of the pixels of acquired image corresponding to the subpart by applying the method according to claim 1 to the subpart; and deciding (56), for each subpart of the document on which a mark can be applied, that a mark has been applied on said subpart when a proportion of the pixels corresponding to the subpart having a colour value, referred to as the pixel colour value, close to the apparent colour value, is below a first predetermined threshold, a pixel colour value being close to the apparent colour value when a difference between said pixel colour value and the apparent colour value is less than a predetermined difference.

3. Method according to claim 2, **characterised in that** the method further comprises applying (52, 54) a correction to the pixels of the acquired image corresponding to each subpart of the document on which a mark can be applied according to the apparent colour value obtained for said subpart, each pixel on which a correction is applied becoming a corrected pixel, each pixel taken into account for determining whether the proportion of pixels corresponding to the subpart having a pixel colour value close to the apparent colour value is below the first predetermined threshold being a corrected pixel.

4. Method according to claim 3, **characterised in that** the correction applied to the pixels of the acquired image corresponding to a subpart of the document on which a mark can be applied (54) comprises applying a different normalisation factor to each component of each of said pixels, each weighting factor being calculated from the apparent colour value associated with said subpart.

5. Method according to claim 2, 3 or 4, **characterised in that** the method further comprises filtering (53), among the apparent colour values determined for each subpart of the document on which a mark can be applied, aberrant colour values, an apparent colour value of a first subpart of a document being considered to be aberrant when a difference between the apparent colour value and a colour value, referred to as the vicinity colour value, representing apparent colour values of second subparts, adjacent to the first subpart, is above a second predetermined threshold, a second subpart being adjacent to a first subpart when a distance between the first subpart and the second subpart is less than a predetermined distance, the apparent colour value associated with a subpart being replaced by the vicinity colour value when the apparent value is an aberrant colour value.

6. Method according to any of claims 2 to 5, **characterised in that** each subpart of the document is a box delimited by a contour and **in that** the method further comprises, for each box on the document:

determining, from the distortion model and the reference model of the document, a position of each pixel corresponding to the contour of the box; determining a colour value, referred to as the contour colour value, representing colour values of pixels of said contour; and correcting the colour value of each pixel of said contour and/or of each pixel situated inside said contour using the contour colour value and a contour pixel colour value given by the reference model of the document.

7. Method according to claim 6, **characterised in that**, when a pixel of said contour or a pixel situated inside said contour is corrected, the pixel is transformed so as to represent it in a colorimetric space in which each pixel is associated with components comprising a hue component, the correction consisting of modifying the hue component using a hue component issuing from the contour colour value and a hue component issuing from the contour pixel colour value given by the reference model of the document.

8. Method for correcting an image, referred to as the acquired image, of a document, said document comprising at least one subpart on which a mark can be applied, **characterised in that** the method comprises the following steps:

   for each subpart of the document on which a mark can be applied, determining (51) an apparent colour value of the pixels of the acquired image corresponding to the subpart by applying the method according to claim 1 to the subpart; and

   applying a correction to the pixels of the acquired image corresponding to each subpart of the document according to the apparent colour value obtained for said subpart.

9. Method according to claim 8, **characterised in that**, the correction applied to the pixels of the acquired image corresponding to a subpart of the document comprises applying a different normalisation factor to each component of each of said pixels, each weighting factor being calculated from the apparent colour value associated with said subpart.

10. Method according to claim 8 or 9, **characterised in that** the method further comprises filtering (53), among the apparent colour values determined for each subpart of the document on which a mark can be applied, aberrant colour values, an apparent colour value of a first subpart being considered to be aberrant when a difference between the apparent colour value and a colour value, referred to as the vicinity colour value, representing apparent colour values of second subparts adjacent to the first subpart, is above a predetermined threshold, a second subpart being adjacent to a first subpart when a distance between the first subpart and the second subpart is less than a predetermined distance, the apparent colour value associated with a subpart being replaced by the vicinity colour value when the apparent colour value is an aberrant colour value.

11. Method according to any of claims 8 to 10, **characterised in that** each subpart of the document is a box delimited by a contour and the **in that** method further comprises, for each box on the document:

   determining, from the distortion model and the reference model of the document, a position of each pixel corresponding to the contour of the box;

determining a colour value, referred as the contour colour value, representing colour values of pixels of said contour; and

correcting the colour value of each pixel of said contour and/or of each pixel situated inside said contour using the contour colour value and a contour pixel colour value given by the reference model of the document.

12. Method according to claim 11, **characterised in that**, when a pixel of said contour or a pixel situated inside said contour is corrected, the pixel is transformed so as to represent it in a colorimetric space in which each pixel is associated with components comprising a hue component, the correction consisting of modifying the hue component using a hue component issuing from the contour colour value and a hue component issuing from the contour pixel colour value given by the reference model of the document.

13. Device (21) comprising means for implementing the method according to claim 1 or according to any of claims 2 to 7 or according to any of claims 8 to 12.

14. Image acquisition system comprising a device according to claim 13.

15. Computer program, **characterised in that** it contains instructions for the implementation, by a device (21), of the method according to claim 1, or the method according to any of claims 2 to 7, or the method according to any of claims 8 to 12, when said program is executed by a processor (211) of said device (21).

16. Storage means, **characterised in that** they store a computer program containing instructions for the implementation, by a device (21), of the method according to claim 1, or the method according to any of claims 2 to 7, or the method according to any of claims 8 to 12, when said program is executed by a processor (211) of said device (21).

Fig. 1

Fig. 2

Fig. 3

Fig. 4A

Fig. 4B

Fig. 4C

Fig. 5

Estimation
déformation
géométrique — 511

↓

Déterminer
position sous-
partie — 512

↓

Déterminer zone
de référence — 513

↓

Déterminer valeur
de couleur
apparente — 514

## Fig. 6

Changement
d'espace
colorimétrique — 541

↓

Correction — 542

## Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5140139 A
- US 20080311551 A
- FR 2952218
- FR 1459742
- US 2001033688 A1